**Europäisches Patentamt**

**European Patent Office**

**Office européen des brevets**

(11) Veröffentlichungsnummer: **0 218 750**

**A1**

# (12) EUROPÄISCHE PATENTANMELDUNG

(21) Anmeldenummer: **85113210.0**

(22) Anmeldetag: **18.10.85**

(51) Int. Cl.⁴: **G01C 15/00**

(43) Veröffentlichungstag der Anmeldung:
**22.04.87 Patentblatt 87/17**

(84) Benannte Vertragsstaaten:
**AT BE CH DE FR GB IT LI NL**

(71) Anmelder: **Gruber, Dietfried,
Dipl.-Ing.Architekt
Auf der Blaicken 5
D-8191 Gelting(DE)**

(72) Erfinder: **Gruber, Dietfried, Dipl.-Ing. Architekt
Auf der Blaicken 5
D-8191 Gelting(DE)**
Erfinder: **Lakner, Jörg, Dipl.-Ing. Architekt
Schiederleiten 30
D-8190 Wolfratshausen(DE)**
Erfinder: **Schleemlich, Peter, Dipl.-Ing.
Architekt
Bahnweg 2
D-8191 Gelting(DE)**

(74) Vertreter: **Liesegang, Roland, Dr.-Ing.
Sckellstrasse 1
D-8000 München 80(DE)**

(54) **Messsystem und Verfahren zum Einmessen und/oder Vermessen von geometrischen Daten im Gelände.**

(57) Ein Meßsystem zum Einmessen und/oder Vermessen von geometrischen Daten im Gelände weist ein Entfernungsmeßinstrument (3) und einen Reflektor (10) auf. Ferner ist ein Graphik-Computer (12) vorgesehen, der in datenübertragender Verbindung mit dem über eine digitale Ein-und Ausgabe verfügenden Entfernungsmeßinstrument (3) steht.

So können im Graphik-Computer eingespeicherte und daraus aufgerufene Zeichnungen vor Ort ins Gelände übertragen werden (Einmessen), oder es kann ein Gelände vermessen und vor Ort in eine CAD-Zeichnung umgesetzt werden.

EP 0 218 750 A1

Fig. 2

## Meßsystem und Verfahren zum Einmessen und/oder Vermessen von geometrischen Daten im Gelände

Bei einem auf dem Markt befindlichen Meßsystem mit Entfernungsmeßgerät und Reflektor werden beim Vermessen gewonnene Daten in digitale Daten umgewandelt, so daß sie über eine Datenausgabe nach dem Meßvorgang im Büro abgerufen werden können, z. B. zur Eingabe in einen graphikfähigen Computer. In das Entfernungsmeßgerät können über ein Eingabegerät auch Daten eingegeben werden, z. B. zum Setzen von Sollwerten für Absteckungsarbeiten, Setzen von dreidimensionalen Sollkoordinaten usw. (Gerät der Firma Tokyo Optical Co. Ltd. "TOPCON GTS-3").

Es ist auch bekannt, bei der Planung von Bauten CAD-Technik (Computer Aided Design) anzuwenden. Dabei gibt der Architekt Daten vor, aufgrund deren ein graphikfähiger Computer die zugehörigen Zeichnungen mit einer Genauigkeit von I mm bezogen auf den Maßstab I:I erstellt. Diese hohe Genauigkeit kann jedoch nicht beim Einmessen in das Gelände mit herkömmlicher Technik übertragen werden. Infolgedessen werden Bauten im Gelände nachwievor mit den üblicherweise durch fehlerbehaftetes Einmessen verbundenen Ungenauigkeiten ausgeführt.

Beim Vermessen des Geländes mit dem oben beschriebenen bekannten Meßsystem müssen sehr viele Daten aufgenommen werden, damit ein wirklichkeitsgetreues Bild des Geländes im Vermessungsbüro erstellt werden kann. Der Vermessungsvorgang ist deshalb sehr zeitaufwendig.

Mit der Erfindung sollen ein Meßsystem und ein Verfahren zum Einmessen und/oder Vermessen von geometrischen Daten im Gelände geschaffen werden, die sowohl beim Einmessen als auch beim Vermessen ein schnelleres und einfacheres Arbeiten mit erhöhter Genauigkeit ermöglichen.

Zur Lösung dieser Aufgabe ist bei einem Meßsystem mit einem Entfernungsmeßinstrument und einem Reflektor zum Einmessen und/oder Vermessen von geometrischen Daten im Gelände, wobei das Entfernungsmeßinstrument zum Erfassen geometrischer Daten und Umwandlung dieser Daten in digitale Form sowie mit digitaler Ein-und Ausgabe ausgebildet ist, erfindungsgemäß vorgesehen, daß ein tragbarer Graphik-Computer mit Bildschirm zur Darstellung der geometrischen Daten vorgesehen ist, der mit dem Entfernungsmeßinstrument zum Datenaustausch während des Meßvorganges gekoppelt ist.

Gemäß einer vorteilhaften Ausgestaltung des Meßsystems nach der Erfindung kann ein Nachführgerät zum automatischen Ausrichten des Entfernungsmeßgerätes auf den Reflektor vorgesehen sein. Dies ermöglicht ein Vermessen im Gelände im Ein-Mannbetrieb, während bisher mindestens zwei Personen zum Vermessen erforderlich waren. Das Nachführgerät kann eine TV-Kamera sein, deren Ausgangssignale an Servomotoren zum Nachführen der Kamera und des Entfernungsmeßgerätes in einer Ausrichtung auf den Reflektor übermittelt werden. Ein Nachführen zum automatischen Ausrichten des Entfernungsmeßgerätes auf den Reflektor ist auch beim Einmessen sinnvoll. Das Abstecken der von der Zeichnung direkt eingemessenen Punkte kann dabei genauer als bisher mittels eines Manipulators bzw. eines frei beweglichen Roboters vonstatten gehen, der vom Graphik-Computer exakt auf den im Gelände eingemessenen Punkt gesteuert wird und diesen im Gelände markiert.

Ein Verfahren zum Einmessen von aus einer Zeichnung gewonnenen digitalisierten Daten unter Verwendung eines Meßsystems wie beschrieben kennzeichnet sich erfindungsgemäß durch die folgenden Verfahrensschritte:

-das Entfernungsmeßinstrument wird an einem Ort aufgestellt, von dem aus das Einmeßgebiet gut einsehbar ist,

-am Bildschirm des Graphik-Computers wird die einzumessende Zeichnung aufgerufen,

-im Gelände und in der Zeichnung identische Fixpunkte werden nach ihrer Relativlage zum Entfernungsmeßinstrument gemessen,

-der Standpunkt des Gerätes wird im Graphik-Computer errechnet und auf dem Bildschirm angezeigt,

-einzumessende Punkte werden an der auf dem Bildschirm dargestellten Zeichnung graphisch angefahren,

-die Meßdaten der angefahrenen Punkte werden vom Computer an das Entfernungsmeßinstrument übermittelt,

-mittels des Entfernungsmeßinstruments und des Reflektors wird die dem angefahrenen Bildpunkt entsprechende Position im Gelände identifiziert,

-die identifizierte Position wird im Gelände markiert.

Um die auch beim Einmessen gemäß der Erfindung möglichen Ungenauigkeiten fixieren zu können, ist gemäß einer Weiterbildung dieses Verfahrens vorgesehen, daß die im Gelände markierten Punkte vermessen, die Meßwerte digitalisiert und in den Graphik-Computer zum Erstellen einer Ist-Zeichnung eingegeben und mit der entsprechenden aufgerufenen Zeichnung zum Feststellen der Abweichung verglichen werden.

Beim Erreichen der gesuchten Position im Gelände kann ein vom Entfernungsmeßinstrument ausgelöstes akustisches oder optisches Signal abgegeben werden.

Ein Verfahren zum Vermessen eines Geländes unter Verwendung eines Meßsystems wie oben beschrieben kennzeichnet sich erfindungsgemäß durch die folgenden Verfahrensschritte:

-Erfassen von Geländepunkten mittels des Meßinstruments und Übertragen der Daten und Speichern in den Graphik-Computer,

-gleichzeitiges Erstellen einer graphischen Darstellung ausgehend von den gemessenen Punkten auf dem Bildschirm des Graphik-Computers vor Ort.

Dem Vermessungsingenieur wird beim Vermessen gemäß der Erfindung die Orientierung im Gelände dadurch erleichtert, daß er die oben zum Einmessen angegebenen Verfahrensschritte ausführt.

Das Verfahren ist so einfach handhabbar, daß auch vermessungstechnische Laien, wie Architekten und Baufachleute etc. damit ohne weiteres arbeiten können. Deshalb ist insbesondere das Verfahren zum Einmessen speziell im Bauwesen praktikabel.

Die Erfindung ist im folgenden anhand - schematischer Zeichnungen mit weiteren Einzelheiten näher erläutert. Es zeigen:

Fig. I eine perspektivische Darstellung des Einmeßvorganges mit einem Meßsystem gemäß der Erfindung, wobei rechts unten nochmals vergrößert der Bildschirm des in Fig. I perspektivisch dargestellten Graphik-Computers mit darauf angezeigter einzumessender Zeichnung gezeigt ist;

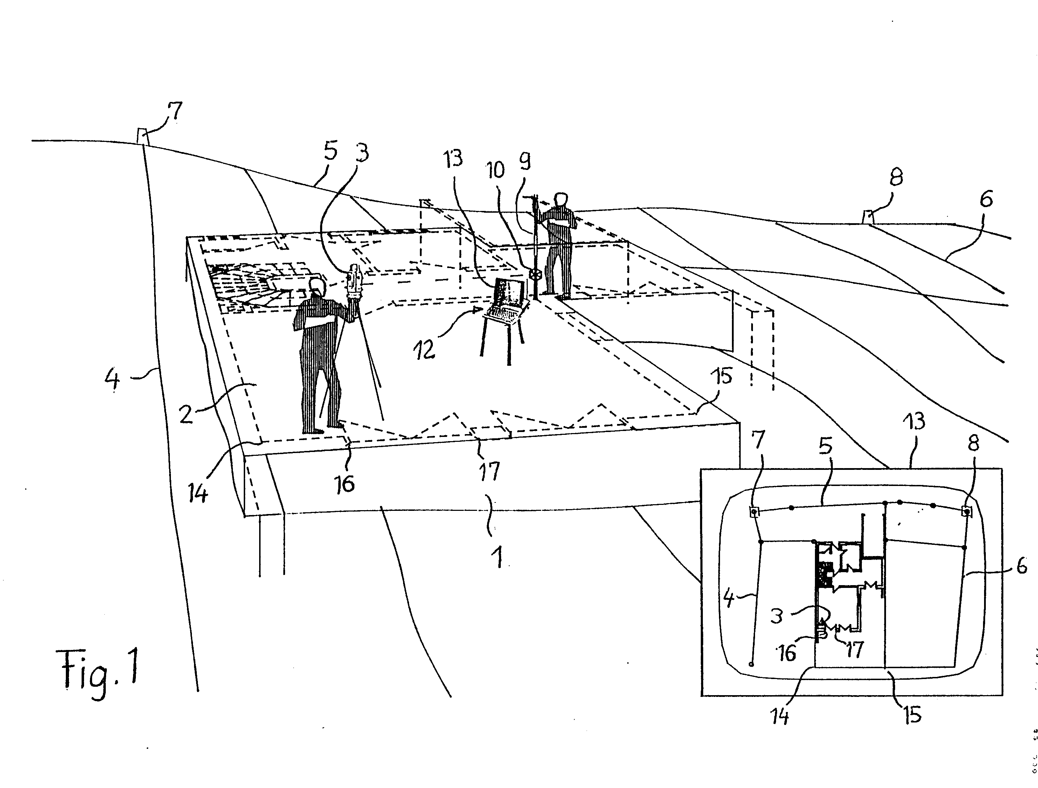

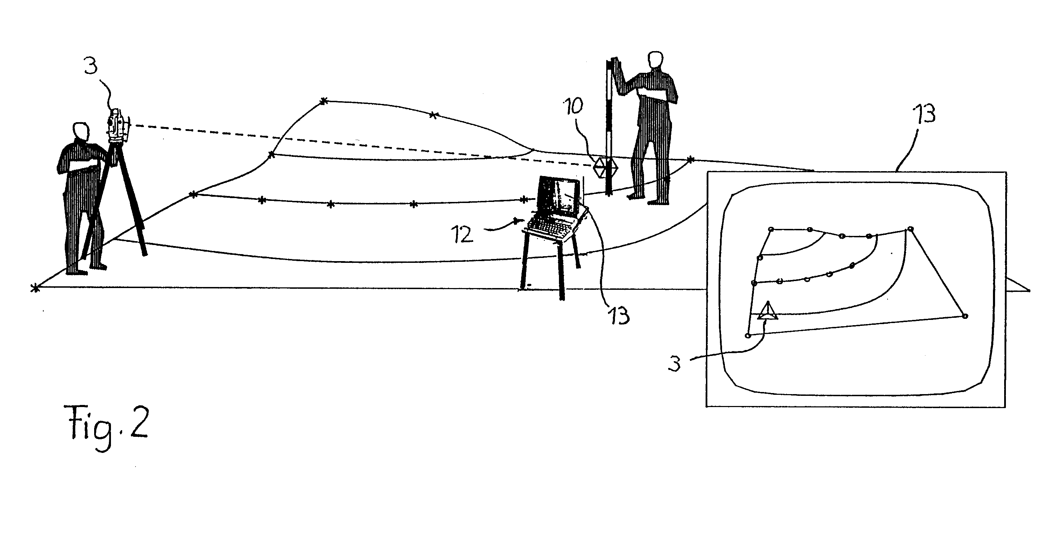

Fig. 2 eine perspektivische Darstellung des Vermessungsvorganges beim Vermessen eines Geländes mit einem Meßsystem gemäß der Erfindung, wobei wiederum rechts unten vergrößert der Bildschirm des beim Vermessen vor Ort verwendeten Graphik-Computers mit bereits eingemessenen Geländeteilen gezeigt ist.

In Fig. I bezeichnet die Bezugszahl I ein Fundament aus Beton, auf dem ein Gebäude errichtet werden soll. In der horizontalen Grundrißebene 2 des Fundamentes I ist ein Entfernungsmeßinstrument 3 mit digitaler Dateneingabe und -ausgabe in einer Position aufgestellt, in der alle Punkte des Fundamentes I sowie des Grundstückes gut einsehbar sind, auf welchem das Gebäude errichtet werden soll. Dieses Grundstück ist durch Trennlinien 4,5,6 und Grenzmarkierungen wie Grenzsteine 7,8 angedeutet. Die zusätzlich in Fig. I gezeichneten Linien stellen beispielsweise Höhenlinien dar.

Auf der Grundrißebene 2 ist außerdem an einer Stange 9 ein üblicher Reflektor 10 angeordnet. Schließlich ist auf der Grundrißebene 2 ein tragbarer Graphik-Computer I2 mit Bildschirm I3 aufgestellt. Dieser Graphik-Computer steht über Funk oder über eine nicht gezeigte Kabelverbindung mit dem Entfernungsmeßinstrument 3 zum Datenfluß in beiden Richtungen in Verbindung.

Der Bildschirm I3 des Graphik-Computers I2 ist in Fig. I rechts unten zur besseren Veranschauung des im folgenden beschriebenen Einmeßvorganges vergrößert gezeichnet. Auf dem Bildschirm I3 ist der auf der Grundrißebene 2 des Fundamentes I einzumessende Gebäude-Grundriß zusammen mit den Grenzlinien des Grundstückes in CAD-Darstellung gezeigt. Der Einfachheit halber sind in dieser Darstellung für gleiche Teile gleiche Bezugszeichen wie im Gelände verwendet.

Das Einmessen geschieht wie folgt: Das Entfernungsmeßgerät 3 wird an einem geeigneten Punkt in der Grundrißebene 3 aufgestellt. Auf dem Bildschirm I3 des Graphik-Computers wird die einzumessende Grundrißzeichnung aufgerufen und dargestellt, wie die vergrößerte Darstellung rechts unten in Fig. I zeigt. Dann werden Fixpunkte, die im Gelände und in der Zeichnung identisch und bekannt sind, nach ihrer relativen Lage zum Entfernungsmeßinstrument gemessen. Die digitalisierten Meßwerte werden vom Entfernungsmeßgerät 3 in den Graphik-Computer I2 eingegeben. Dieser errechnet den Standpunkt des Entfernungsmeßinstrumentes und zeigt diesen Standpunkt am Bildschirm an.

Nun können markante Punkte der Grundrißzeichnung wie Eckpunkte I4,I5 oder Endpunkte von Türöffnungen I6,I7 aus der Zeichnung in das Gelände eingemessen werden. Dazu werden die gewünschten Punkte am Bildschirm I3 mit dem Cursor (nicht gezeigt) angefahren bzw. identifiziert. Die daraus resultierenden Meßdaten für das Entfernungsmeßinstrument, z. B. Azimut, Elevation und Entfernung, werden vom Graphik-Computer I2 an das Entfernungsmeßinstrument 3 übermittelt. Das Entfernungsmeßinstrument kann dann von einer Bedienungsperson von Hand auf die gewünschten Richtdaten eingestellt werden. Alternativ ist eine automatische Einstellung mittels einer Nachführvorrichtung (nicht gezeigt) möglich, welche mithilfe von Servo-Motoren das Entfernungsmeßinstrument auf den gewünschten Richtstrahl einstellt. Um den gesuchten Punkt im Gelände zu finden, wird nun der Reflektor 10 von der oder einer zweiten Bedienungsperson entlang dem Meßstrahl verlagert. Hat der Reflektor die richtige Position erreicht, so löst das Entfernungsmeßinstrument ein akustisches oder optisches Signal am Graphik-Computer l2 aus. Die den Reflektor l0 verlagernde Bedienungsperson weiß dann, daß der gewünschte Punkt im Gelände gefunden ist.

Auf diese Weise lassen sich die markanten Punkte des in der Zeichnung auf dem Bildschirm l3 aufgerufenen Grundrisses problemlos in die Grundrißebene 2 des Fundamentes l übertragen. Wie üblich werden diese Punkte dann durch Verbindungslinien von den einzumessenden Personen verbunden.

Für den Fall, daß der gesuchte Punkt an nicht oder schwer zugänglichem Ort liegt, beispielsweise unterhalb der Grundrißebene 2, gibt der Graphik-Computer l2 nur die Lage des Punktes in der orthogonalen Projektion an. Die Höhenkote des im Grundriß abgesteckten Punktes läßt sich am Bildschirm relativ zu der entsprechenden Horizontalebene anzeigen und speichern. Die Zeichnung kann also auch Elemente in verschiedenen Ebenen enthalten, was das Aufrufen von mehreren, jeweils eine Ebene enthaltenden Zeichnungen erübrigt.

Ist der gesamte Zeichnungsinhalt in das Gelände eingemessen, so verfügt man auch für die Daten für eventuell erforderliche Geländeverformungen. Beim beschriebenen Einmessen von Geschoßgrundrissen auf Betondecken wird sogleich die Nivellierung der Betondecke vorgenommen. Ungenauigkeiten in der Ebenheit werden festgestellt und zur weiteren Informationsverarbeitung gespeichert.

Um Ungenauigkeiten erfassen zu können, die beim Markieren des gesuchten Punktes im Gelände von Hand auftreten können, wird mittels des Entfernungsmeßgerätes die Lage des tatsächlich markierten "Ist-Punktes" mittels des Entfernungsmeßinstrumentes 3 gemessen und an den Graphik-Computer signalisiert. Durch Vergleich mit der Lage des "Soll-Punktes" in der aufgerufenen Zeichnung läßt sich dann die Abweichung definiert erfassen und gegebenenfalls korrigieren. Wenn derartige Ungenauigkeiten von vorneherein vermieden werden sollen, ist auch denkbar, den gesuchten Punkt mittels eines vom Graphik-Computer l2 gesteuerten Manipulators im Gelände zu markieren (nicht gezeigt).

Fig. 2 veranschaulicht das Vermessen mit dem Meßsystem und -verfahren gemäß der Erfindung. Dabei sind gleiche Teile des Meßsystems mit gleichen Bezugszahlen wie in Fig. l versehen.

Das Entfernungsmeßinstrument 3 wird wie üblich an einem Ort im Gelände aufgestellt, von wo dieses gut einsehbar ist. Die den Reflektor l0 tragende Person schreitet wie üblich zu Fuß Höhenlinien oder andere Linien im Gelände ab und nimmt diese punktweise auf. Durch direktes Übertragen der gewonnenen Punkte vom Entfernungsmeßinstrument 3 über die nicht gezeichnete Verbindung in den Graphik-Computer l2 wird dort vor Ort unmittelbar eine CAD-Zeichnung aufgenommen. Dadurch kann die Anzahl der zu vermessenden Punkte auf ein notwendiges Minimum reduziert werden, weil die Verbindungen zwischen Punkten, z. B. grobe Höhenlinien, Kanten im Gelände, Polygone und Einzelpunkte, schon bei der Vermessung der Punkte mittels CAD-Befehlen vor Ort erzeugt werden. Dies erlaubt ein schnelleres und genaueres Vermessen als bisher.

Werden die vor Ort gewonnenen Zeichnungen in einen stationären Computer im Büro geladen, so können sie mit geeigneten Programmen zu Zeichnungen von weiterreichendem Inhalt verarbeitet werden. So können Höhenlinien, die vom Vermessungsingenieur im Gelände zu Fuß abgeschritten und vor Ort in den Graphik-Computer eingegeben wurden, in ihre exakte Lage gebracht werden. Es können Geländenetze berechnet werden, die eine perspektivische Darstellung ermöglichen. Es können Längen-Flächen-und Volumenberechnungen durchgeführt werden und vieles mehr.

Es besteht auch die Möglichkeit, die im Gelände gewonnene CAD-Zeichnung von einer Telefonzelle aus an einen zentralen Computer zur Weiterverarbeitung zu übermitteln, wenn Daten - schnell benötigt werden.

Zur Orientierung im Gelände geht der Vermessungsingenieur sinnvollerweise so vor, wie anhand der Fig. l beschrieben, d. h. wie beim Einmessen. Mit anderen Worten kann er sich im Gelände durch erneutes Einmessen und Identifizieren im Gelände von bereits vermessenen, z. B. in einem Katasterplan o. dgl. vorhandenen Punkten zurechtfinden. Dies bedingt lediglich das Digitalisieren des Katasterplanes in eine CAD-Darstellung, die dann vor Ort aufgerufen werden kann.

**Ansprüche**

l. Meßsystem mit einem Entfernungsmeßinstrument (3) und einem Reflektor (l0) zum Einmessen und/oder Vermessen von geometrischen Daten im Gelände, wobei das Entfernungsmeßinstrument zum Erfassen geometrischer Daten und Umwandlung dieser Daten in digitale Form sowie mit digitaler Datenein-und ausgabe ausgebildet ist, dadurch **gekennzeichnet**, daß ein tragbarer Graphik-Computer (l2) mit Bildschirm (l3) zur Darstellung der geometrischen Daten vorgesehen ist, der mit dem Entfernungsmeßinstrument - (3) zum Datenaustausch während des Meßvorganges gekoppelt ist.

2. Meßsystem nach Anspruch I, dadurch **gekennzeichnet**, daß ein Nachführgerät zum automatischen Ausrichten des Entfernungsmeßinstrumentes auf den Reflektor vorgesehen ist.

3. Meßsystem nach Anspruch 2, dadurch **gekennzeichnet**, daß das Nachführgerät eine TV-Kamera ist, deren Ausgangssignale an Servomotoren zum Nachführen der Kamera und des Entfernungsmeßgerätes in Ausrichtung auf den Reflektor übermittelt werden.

4. Meßsystem nach einem der Ansprüche I bis 3, dadurch **gekennzeichnet**, daß ein vom Graphik-Computer gesteuerter Manipulator zum Markieren der beim Einmessen anzufahrenden Positionen im Gelände vorgesehen ist.

5. Verfahren zum Einmessen von aus einer Zeichnung gewonnenen digitalisierten Daten unter Verwendung eines Meßsystems nach einem der Ansprüche I bis 4, **gekennzeichnet** durch die folgenden Verfahrensschritte:

-das Entfernungsmeßinstrument wird an einem Ort aufgestellt, von dem aus das Einmeßgebiet gut einsehbar ist,

-am Bildschirm des Graphik-Computers wird die einzumessende Zeichnung aufgerufen,

-im Gelände und in der Zeichnung identische Fixpunkte werden nach ihrer Relativlage zum Entfernungsmeßinstrument gemessen,

-der Standpunkt des Gerätes wird im Graphik-Computer errechnet und auf dem Bildschirm angezeigt,

-einzumessende Punkte werden an der auf dem Bildschirm dargestellten Zeichnung graphisch angefahren,

-die Meßdaten der angefahrenen Punkte werden vom Computer an das Entfernungsmeßinstrument übermittelt,

-mittels des Entfernungsmeßinstruments und des Reflektors wird die dem angefahrenen Bildpunkt entsprechende Position im Gelände identifiziert,

-die identifizierte Position wird im Gelände markiert.

6. Verfahren nach Anspruch 5, dadurch **gekennzeichnet**, daß die Position im Gelände automatisch markiert wird, insbesondere durch automatisches Verlagern des Reflektors längs des Richtstrahls des Entfernungsmeßinstrumentes.

7. Verfahren nach Anspruch 5 oder 6, dadurch **gekennzeichnet**, daß die im Gelände markierten Punkte vermessen, die Meßwerte digitalisiert und in den Graphik-Computer zum Erstellen einer Ist-Zeichnung eingegeben und mit der entsprechenden aufgerufenen Zeichnung zum Feststellen der Abweichung verglichen werden.

8. Verfahren nach einem der Ansprüche 5 bis 7, dadurch **gekennzeichnet** , daß beim Erreichen der gesuchten Position im Gelände ein vom Entfernungsmeßinstrument ausgelöstes akustisches oder optisches Signal abgegeben wird.

9. Verfahren nach einem der Ansprüche 5 bis 8, dadurch **gekennzeichnet**, daß für den Fall, daß die gesuchte Position im Gelände an unzugänglicher Stelle, z. B. unterhalb der Geländeoberfläche, liegt, die Position in orthogonaler Projektion angegeben und die zugehörige Höhenkote am Bildschirm relativ zu einer definierten Ebene angezeigt und im Computer gespeichert wird.

I0. Verfahren zum Vermessen eines Geländes unter Verwendung eines Meßsystems nach einem der Ansprüche I bis 3, **gekennzeichnet** durch die folgenden Verfahrensschritte:

-Erfassen von Geländepunkten mittels des Meßinstruments und Übertragen der Daten und Speichern in den Graphik-Computer,

-gleichzeitiges Erstellen einer graphischen Darstellung ausgehend von den gemessenen Punkten auf dem Bildschirm des Graphik-Computers vor Ort.

II. Verfahren nach Anspruch I0, dadurch **gekennzeichnet**, daß zur Orientierung im Gelände beim Vermessen die Verfahrensschritte nach Anspruch 5 angewendet werden.

I2. Verfahren nach Anspruch I0 oder II, dadurch **gekennzeichnet**, daß das Entfernungsmeßgerät automatisch auf den Reflektor ausgerichtet wird.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 028 581 (CARL ZEISS JENA) * Zusammenfassung * | 1,5 | G 01 C 15/00 |
| A | DE-A-3 200 237 (U. METTENMEIER) | | |

RECHERCHIERTE SACHGEBIETE (Int. Cl.4)

G 01 C
G 06 F

Der vorliegende Recherchenbericht wurde für alle Patentansprüche erstellt.

| Recherchenort | Abschlußdatum der Recherche | Prüfer |
|---|---|---|
| DEN HAAG | 24-06-1986 | DE BUYZER H.J. |